# EUROPEAN PATENT APPLICATION

(11) **EP 4 507 105 A1**
(43) Date of publication of application: **12.02.2025**
(21) Application number: 23838479.6
(22) Date of filing: 18.04.2023
(51) Int. Cl.: H01M 50/403

(54) **POLYOLEFIN-BASED FILM AND PREPARATION METHOD THEREFOR, SEPARATOR, SECONDARY BATTERY, AND ELECTRIC DEVICE**

(30) Priority: 11.07.2022 WO PCT/CN2022/104965
(71) Applicant: Contemporary Amperex Technology Co., Limited, Ningde, Fujian 352100 (CN)
(72) Inventor: XU, Chong, Ningde, Fujian 352100 (CN); LI, Cheng, Ningde, Fujian 352100 (CN); YANG, Jianrui, Ningde, Fujian 352100 (CN)
(74) Representative: Gong, Jinping
(86) International application number: PCT/CN2023/088822
(87) International publication number: WO 2024/011978

(57) **Abstract**

This application relates to a polyolefin-based film, including polyolefins with different weight-average molecular weights; where thickness of the polyolefin-based film is ≤ 6 µm, and the polyolefin-based film has a machine-direction shrinkage of ≤ 2% and a transverse-direction shrinkage of ≤ 1% at 115°C/1h. This application uses polyolefins with different weight-average molecular weights as raw materials, enabling the resulting polyolefin-based films to have an ultra-thin thickness and a low thermal shrinkage. The reduction in thickness of the polyethylene-based film can improve the energy density of the cell to some extent, and the reduction in thermal shrinkage can improve the short-circuit test pass rate of the bare cell, enhancing the safety performance of the cell. **In** addition, the reduction in thermal shrinkage helps improve the heat resistance of the polyolefin-based film, delaying the thermal failure of adjacent cells when thermal runaway occurs in a cell.

## Description

### TECHNICAL FIELD

This application pertains to the technical field of batteries, and specifically relates to a polyolefin-based film and a preparation method thereof, a separator, a secondary battery, and an electric apparatus.

### BACKGROUND

With the development of technology, clean energy such as batteries is gradually replacing traditional fossil fuels to provide power for various scenarios. In a secondary battery, a separator is used to separate positive and negative electrodes to prevent a short circuit caused by direct contact between the positive and negative electrodes. With the increasing demand for portable products, ultra-thin separators have begun to be widely used. However, the existing polyolefin-based films used for preparing ultra-thin separators cannot achieve both low thickness and excellent thermal shrinkage performance.

Therefore, there is an urgent need to develop a polyolefin-based film that can achieve low thickness, high puncture strength, and excellent thermal shrinkage performance at the same time.

### SUMMARY

**In** view of the problems described in the background, this application provides a polyolefin-based film. Such polyolefin-based film can achieve both low thickness and excellent thermal shrinkage performance.

A polyolefin-based film provided according to a first aspect of this application includes polyolefins with different weight-average molecular weights. Thickness of the polyolefin-based film is ≤ 6 µm, and the polyolefin-based film has a machine-direction shrinkage of ≤ 2% and a transverse-direction shrinkage of ≤ 1% at 115°C/1h.

In the technical solution of the embodiments of this application, polyolefins with different weight-average molecular weights are used as raw materials, enabling the resulting polyolefin-based film to have both an ultra-thin thickness and a low thermal shrinkage. The reduction in thickness of the polyethylene-based film can improve energy density of a cell to some extent.

Further, the resulting polyolefin-based film also has a high puncture strength. The improvement in puncture strength and the reduction in thermal shrinkage can improve the short-circuit test pass rate of the bare cell, enhancing the safety performance of the cell.

In addition, the reduction in thermal shrinkage helps improve the heat resistance of the polyolefin-based film, delaying the thermal failure of adjacent cells when thermal runaway occurs in a cell.

In some embodiments, according to the first aspect, a first example of the first aspect is proposed, where the thickness of the polyolefin-based film is 0.5-6 µm; optionally, a puncture strength of the polyolefin-based film is ≥ 380 gf; further optionally, the puncture strength of the polyolefin-based film is 380-1000 gf; and still further optionally, the puncture strength of the polyolefin-based film is 400-600 gf; and optionally, the polyolefin-based film has a machine-direction shrinkage of 0%-1.8% and a transverse-direction shrinkage of 0%-0.8% at 115°C/1h.

In this design, the thickness, puncture strength, and thermal shrinkage of the polyolefin-based film are properly controlled to balance the puncture strength and thermal stability of the polyolefin-based film, thereby meeting comprehensive performance requirements for the ultra-thin separator in practical applications.

In some embodiments, according to the first aspect, a second example of the first aspect is proposed, where the polyolefin includes a first polyethylene and a second polyethylene. A weight-average molecular weight of the first polyethylene is ≥ 800,000; and optionally, the weight-average molecular weight of the first polyethylene is 800,000-3,000,000; and a weight-average molecular weight of the second polyethylene is ≤ 600,000; and optionally, the weight-average molecular weight of the second polyethylene is 300,000-600,000.

In this design, a mixture of high molecular weight polyethylene and low molecular weight polyethylene is used, and its molecular weight range is optimized, allowing the resulting ultra-thin polyolefin-based film to have both high puncture strength and low thermal shrinkage. The ultra-thin polyolefin-based film prepared using low molecular weight polyethylene alone cannot meet the mechanical strength requirement. The ultra-thin polyolefin-based film prepared using high molecular weight polyethylene alone is difficult to process, difficult to draw at a large ratio, and unsuitable for large-scale industrial production, and the resulting base film has poor thickness consistency.

In some embodiments, according to the first aspect, a third example of the first aspect is proposed, where a mass ratio of the first polyethylene to the second polyethylene is 3:7-9.9:0.1.

In this design, through optimization of the mass ratio of the first polyethylene to the second polyethylene, the thickness of the polyolefin-based film can be further reduced, the puncture strength can be improved, and the thermal shrinkage can be lowered.

In some embodiments, according to the first aspect, a fourth example of the first aspect is proposed, where the polyolefin includes one or both of polypropylene and polyethylene.

In some embodiments, according to the first aspect, a fifth example of the first aspect is proposed, where the machine-direction tensile strength of the polyolefin-based film is ≥ 3800 kgf/cm², and the transverse-direction tensile strength of the polyolefin-based film is ≥ 3000 kgf/cm².

In this design, the increased tensile strength of the polyolefin-based film facilitates effective coating of metal particles and anode and cathode particles in the bare cell, preventing internal short circuits during the cell preparation process.

In some embodiments, according to the first aspect, a sixth example of the first aspect is proposed, where the polyolefin-based film has one or more of the following characteristics:
(1) porosity of the polyolefin-based film is 25%-40%;
(2) air permeability of the polyolefin-based film is 100-160s/100cc; and
(3) surface density of the polyolefin-based film is 2.8-3.6 g/m².

In this design, through optimization of the pore structure of the polyethylene-based film, effective ion conduction can be implemented.

In some embodiments, according to the first aspect, a seventh example of the first aspect is proposed, where crystallinity of the polyolefin-based film is ≥ 75%; and optionally, the crystallinity of the polyolefin-based film is 75%-85%.

A second aspect of this application provides a preparation method of polyolefin-based film, including:
mixing polyolefins with different weight-average molecular weights and a pore-forming agent, and making a resulting mixture into a film, where a total weight of the polyolefins accounts for 15wt%-35wt% of the mixture;
subjecting the film to biaxial drawing, where a machine-direction drawing ratio is 5-50 times, and a transverse-direction drawing ratio is 5-50 times; and optionally, the machine-direction drawing ratio is 5-20 times, and the transverse-direction drawing ratio is 5-20 times;
removing the pore-forming agent to form pores; and
subjecting the film to draw-setting and heat-setting to obtain the polyolefin-based film.

In the technical solution of the embodiments of this application, through use of the polyolefins with different weight-average molecular weights, coupled with large-ratio transverse-direction drawing/machine-direction drawing, an ultra-thin polyolefin-based film with a low thermal shrinkage can be prepared.

Further, a higher puncture strength of the polyolefin-based film means better resistance to metal particle puncture, effectively preventing cathode particles, anode particles, and metal foreign objects from puncturing the separator under a specific pressure and causing a short circuit inside the bare cell. Therefore, the improvement in puncture strength of the polyolefin-based film can increase the short-circuit test pass rate of the bare cell.

In addition, the increased drawing ratio can increase the orientations between polyolefin molecules, and improve the crystallinity of the ultra-thin polyethylene-based film, thereby enhancing the thermal stability of the ultra-thin polyethylene-based film.

In some embodiments, according to the second aspect, a first example of the second aspect is proposed, where the total weight of the polyolefins accounts for 20wto/0-30wt% of the mixture. The machine-direction drawing ratio is 10-20 times. The transverse-direction drawing ratio is 10-20 times.

In this design, through optimization of the proportion of polyolefins, the machine-direction drawing ratio, and the transverse-direction drawing ratio, the thickness of the polyolefin-based film can be further reduced, the puncture strength can be improved, and the thermal shrinkage can be lowered.

In some embodiments, according to the second aspect, a second example of the second aspect is proposed, where the biaxial drawing causes crystallinity of the polyolefin-based film to be ≥ 75%; and optionally, the biaxial drawing causes the crystallinity of the polyolefin-based film to be 75%-85%.

In some embodiments, according to the second aspect, a third example of the second aspect is proposed, where the polyolefin includes a first polyethylene and a second polyethylene, where
a weight-average molecular weight of the first polyethylene is ≥ 800,000; and optionally, the weight-average molecular weight of the first polyethylene is 800,000-3,000,000; and
a weight-average molecular weight of the second polyethylene is ≤ 600,000; and optionally, the weight-average molecular weight of the second polyethylene is 300,000-600,000.

In this design, a mixture of high molecular weight polyethylene and low molecular weight polyethylene is used, and its molecular weight range is optimized, allowing the resulting ultra-thin polyolefin-based film to have both high puncture strength and low thermal shrinkage. The ultra-thin polyolefin-based film prepared using low molecular weight polyethylene alone cannot meet the mechanical strength requirement. The ultra-thin polyolefin-based film prepared using high molecular weight polyethylene alone is difficult to process, difficult to draw at a large ratio, and unsuitable for large-scale industrial production, and the resulting base film has poor thickness consistency.

In some embodiments, according to the second aspect, a fourth example of the second aspect is proposed, where a mass ratio of the first polyethylene to the second polyethylene is 3:7-9.9:0.1.

In this design, through optimization of the mass ratio of the first polyethylene to the second polyethylene, the thickness of the polyolefin-based film can be further reduced, the puncture strength can be improved, and the thermal shrinkage can be lowered.

In some embodiments, according to the second aspect, a fifth example of the second aspect is proposed, where the pore-forming agent includes one or more of white oil, liquid paraffin, mineral oil, soybean oil, phthalate, and aromatic ether.

A third aspect of this application provides a separator including the polyolefin-based film according to the first aspect of this application or a polyolefin-based film obtained using the preparation method according to the second aspect of this application.

In the technical solution of the embodiments of this application, since the polyolefin-based film according to the first aspect of this application or the polyolefin-based film obtained using the preparation method according to the second aspect of this application is used, the separator of this application has the advantages of being ultra-thin, having high puncture strength, having low thermal shrinkage, and the like.

A fourth aspect of this application provides a secondary battery including the separator according to the second aspect of this application.

In the technical solution of the embodiments of this application, since the polyolefin-based film according to the first aspect of this application or the polyolefin-based film obtained using the preparation method according to the second aspect of this application is used, the secondary battery of this application has the advantages of being ultra-thin, having high puncture strength, having low thermal shrinkage, and the like.

A fifth aspect of this application provides an electric apparatus including the secondary battery according to the fourth aspect of this application.

**In** the technical solution of the embodiments of this application, since the polyolefin-based film according to the first aspect of this application or the polyolefin-based film obtained using the preparation method according to the second aspect of this application is used, the electric apparatus of this application has the advantages of being ultra-thin, having high puncture strength, having low thermal shrinkage, and the like.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### DESCRIPTION OF EMBODIMENTS

The following describes example embodiments of this disclosure in more detail. Although example embodiments of this disclosure are shown, it should be understood that this disclosure can be implemented in various forms and should not be limited to the embodiments described herein. Rather, these embodiments are provided so that this disclosure can be more thoroughly understood and fully convey the scope of this disclosure to those skilled in the art.

Unless otherwise defined, meanings of all technical and scientific terms used in this specification are the same as those commonly understood by persons skilled in the art of this application. The terms used in this specification are merely intended to describe specific embodiments, but not to limit this application. The terms "include" and "have" and any variations thereof in the specification and claims of this application are intended to cover non-exclusive inclusions.

For simplicity, only some numerical ranges are explicitly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not explicitly recorded, each point or individual value between endpoints of a range is included in the range. Therefore, each point or individual value may be used as its own lower limit or upper limit to be combined with any other point or individual value or combined with any other lower limit or upper limit to form a range not explicitly recorded.

In the description herein, it should be noted that unless otherwise specified, "above" and "below" include the number itself, and "one or more" means more than two (including two).

With the development of technology, clean energy such as batteries is gradually replacing traditional fossil fuels to provide power for various scenarios. In a secondary battery, a separator is used to separate positive and negative electrodes to prevent a short circuit caused by direct contact between the positive and negative electrodes. With the increasing demand for portable products, ultra-thin separators have begun to be widely used. However, the existing polyolefin-based films used for preparing ultra-thin separators cannot achieve low thickness, high puncture strength, and excellent thermal shrinkage performance at the same time. Therefore, there is an urgent need to develop a polyolefin-based film that can achieve low thickness, high puncture strength, and excellent thermal shrinkage performance at the same time.

Researchers have found that a smaller thickness of the polyolefin-based film leads to poorer mechanical properties, such as lower puncture strength along with higher thermal shrinkage. This leads to the risk of short circuits caused by direct contact between the positive and negative electrodes during the use of the film as a separator.

To solve this technical problem, the inventors, through in-depth research, have designed a polyolefin-based film that uses polyolefins with different weight-average molecular weights as raw materials, enabling the resulting polyolefin-based film to have both an ultra-thin thickness while having high puncture strength and low thermal shrinkage. The reduction in thickness of the polyethylene-based film can improve energy density of a cell to some extent. The improvement in puncture strength and the reduction in thermal shrinkage can improve the short-circuit test pass rate of the bare cell, enhancing the safety performance of the cell. In addition, the reduction in thermal shrinkage helps improve the heat resistance of the polyolefin-based film, delaying the thermal failure of adjacent cells when thermal runaway occurs in a cell.

The technical solution described in the embodiments of this application is applicable to a polyolefin-based film, and also applicable to the preparation process of the polyolefin-based film, a separator using the polyolefin-based film, a secondary battery using the separator, a battery module using the secondary battery, a battery pack using the battery module, and an electric apparatus using at least one of the secondary battery, the battery module, and the battery pack.

According to a first aspect, some embodiments of this application provide a polyolefin-based film. The polyolefin-based film can include polyolefins with different weight-average molecular weights. Thickness of the polyolefin-based film is ≤ 6 µm, and the polyolefin-based film has a machine-direction (MD) shrinkage of ≤ 2% and a transverse-direction (TD) shrinkage of ≤ 1%.

In the technical solution of the embodiments of this application, polyolefins with different weight-average molecular weights are used as raw materials. High molecular weight polyolefins have longer polyolefin molecular chains, increasing the entanglement of molecular chains to improve the strength of the base film. The addition of low molecular weight polyolefins can improve the manufacturability of polyolefins, enabling the resulting polyolefin-based film to have both an ultra-thin thickness and a high puncture strength. Increasing the drawing ratio can lead to secondary crystallization of the polyolefin molecular chains, improving the high-temperature resistance of the separator and reducing the thermal shrinkage of the separator.

In some embodiments, according to the first aspect, a first example of the first aspect is proposed, where the thickness of the polyolefin-based film is 0.5-6 µm.

Further, a puncture strength of the polyolefin-based film is ≥ 380 gf; still further, the puncture strength of the polyolefin-based film may be 380-1000 gf; and yet further, the puncture strength of the polyolefin-based film may be 400-600 gf.

Further, the polyolefin-based film has a machine-direction shrinkage of 0%-1.8% and a transverse-direction shrinkage of 0%-0.8% at 115°C/1h.

In this design, the thickness, puncture strength, and thermal shrinkage of the polyolefin-based film are properly controlled to balance the puncture strength and thermal stability of the polyolefin-based film, thereby meeting comprehensive performance requirements for the ultra-thin separator in practical applications.

In some specific embodiments, the thickness of the polyolefin-based film may be, for example, 0.5 µm, 1 µm, 1.5 µm, 2 µm, 2.5 µm, 3 µm, 3.5 µm, 4 µm, 4.5 µm, 5 µm, 5.1 µm, 5.2 µm, 5.3 µm, 5.4 µm, 5.5 µm, 5.6 µm, 5.7 µm, 5.8 µm, 5.9 µm, or 6 µm. Optionally, the thickness of the polyolefin-based film may be 2-6 µm, 3-6 µm, 4-6 µm, or 5-6 µm.

In some specific embodiments, the puncture strength of the polyolefin-based film may be, for example, 380 gf, 390 gf, 400 gf, 410 gf, 420 gf, 430 gf, 440 gf, 450 gf, 460 gf, 470 gf, 480 gf, 490 gf, 500 gf, 510 gf, 520 gf, 530 gf, 540 gf, 550 gf, 560 gf, 570 gf, 580 gf, 590 gf, 600 gf, 700 gf, 800 gf, 900 gf, or 1000 gf. Optionally, the puncture strength of the polyolefin-based film may be 400-550 gf, 400-500 gf, or 400-450 gf.

In some specific embodiments, the machine-direction shrinkage of the polyolefin-based film at 115°C/1h may be, for example, 0%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, or 1.8%. Optionally, the machine-direction shrinkage of the polyolefin-based film at 115°C/1h may be 0.5%-1.8%, 1.0%-1.8%, or 1.3%-1.8%.

In some specific embodiments, the transverse-direction shrinkage of the polyolefin-based film at 115°C/1h may be, for example, 0%, 0.1%, 0.2%, 0.3%, 0.4%, 0.5%, 0.6%, 0.7%, or 0.8%. Optionally, the thermal shrinkage of the transverse-direction shrinkage of the polyolefin-based film at 115°C/1h may be 0.3%-0.8%.

In some embodiments, according to the first aspect, a second example of the first aspect is proposed, where the polyolefin may include a first polyethylene and a second polyethylene. A weight-average molecular weight of the first polyethylene is ≥ 8.0×10⁵. A weight-average molecular weight of the second polyethylene is ≤ 6.0×10⁵.

In this design, a mixture of high molecular weight polyethylene and low molecular weight polyethylene is used, and its molecular weight range is optimized, allowing the resulting ultra-thin polyolefin-based film to have both high puncture strength and low thermal shrinkage. The ultra-thin polyolefin-based film prepared using low molecular weight polyethylene alone cannot meet the mechanical strength requirement. The ultra-thin polyolefin-based film prepared using high molecular weight polyethylene alone is difficult to process, difficult to draw at a large ratio, and unsuitable for large-scale industrial production, and the resulting base film has poor thickness consistency.

In some specific embodiments, the weight-average molecular weight of the first polyethylene may be 8.0×10⁵-30.0× 10⁵, for example, may be 8.0×10⁵, 9.0×10⁵, 10.0× 10⁵, 11.0×10⁵, 12.0× 10⁵, 13.0× 10⁵, 14.0× 10⁵, 15.0× 10⁵, 16.0× 10⁵, 17.0× 10⁵, 18.0× 10⁵, 19.0× 10⁵, 20.0× 10⁵, 25.0× 10⁵, or 30.0× 10⁵. Optionally, the weight-average molecular weight of the first polyethylene may be 8.0×10⁵-30.0×10⁵, 8.0× 10⁵-15.0× 10⁵, or 8.0×10⁵-10.0×10⁵.

In some specific embodiments, the weight-average molecular weight of the second polyethylene may be 1.0x10⁵-6.0x 10⁵, for example, 1.0×10⁵, 2.0×10⁵, 3.0×10⁵, 4.0×10⁵, 5.0×10⁵, or 6.0×10⁵. Optionally, the weight-average molecular weight of the second polyethylene may be 1.0×10⁵-3.0x10⁵, 2.0× 10⁵-4.0× 10⁵, 3.0× 10⁵-5.0× 10⁵, or 3.0×10⁵-6.0×10⁵.

In some embodiments, according to the first aspect, a fourth example of the first aspect is proposed, where a mass ratio of the first polyethylene to the second polyethylene may be 3:7-9.9:0.1.

In this design, through optimization of the mass ratio of the first polyethylene to the second polyethylene, the thickness of the polyolefin-based film can be further reduced, the puncture strength can be improved, and the thermal shrinkage can be lowered.

In some specific embodiments, the mass ratio of the first polyethylene to the second polyethylene may be, for example, 3:7, 4:6, 5:5, 6:4, 7:3, 8:2, 9:1, or 9.9:0.1. Optionally, the mass ratio of the first polyethylene to the second polyethylene may be 3:7-5:5 or 4:6-6:4.

In some embodiments, according to the first aspect, a fifth example of the first aspect is proposed, where the machine-direction tensile strength of the polyolefin-based film is ≥ 3800 kgf/cm², and the transverse-direction tensile strength of the polyolefin-based film is ≥ 3000 kgf/cm².

In this design, the increased tensile strength of the polyolefin-based film facilitates effective coating of metal particles and anode and cathode particles in the bare cell, preventing internal short circuits during the cell preparation process.

In some specific embodiments, the machine-direction tensile strength of the polyolefin-based film may be 4000-6000 kgf/cm², optionally 4000-5000 kgf/cm², for example, 4000 kgf/cm², 4100 kgf/cm², 4200 kgf/cm², 4300 kgf/cm², 4400 kgf/cm², 4500 kgf/cm², 4600 kgf/cm², 4700 kgf/cm², 4800 kgf/cm², 4900 kgf/cm², or 5000 kgf/cm².

In some specific embodiments, the transverse-direction tensile strength of the polyolefin-based film may be 3200-5000 kgf/cm², optionally 3200-4000 kgf/cm², for example, 3200 kgf/cm², 3300 kgf/cm², 3400 kgf/cm², 3500 kgf/cm², 3600 kgf/cm², 3700 kgf/cm², 3800 kgf/cm², 3900 kgf/cm², or 4000 kgf/cm².

In some embodiments, according to the first aspect, a sixth example of the first aspect is proposed, where porosity of the polyolefin-based film may be 25%-40%.

In some embodiments, according to the first aspect, a seventh example of the first aspect is proposed, where air permeability of the polyolefin-based film may be 100-160s/100cc.

In some embodiments, according to the first aspect, an eighth example of the first aspect is proposed, where surface density of the polyolefin-based film may be 2.8-3.6 g/m².

In this design, through optimization of the pore structure of the polyethylene-based film, effective ion conduction can be implemented.

In some specific embodiments, the porosity of the polyolefin-based film may be, for example, 25%, 26%, 27%, 28%, 29%, 30%, 31%, 32%, 33%, 34%, 35%, 36%, 37%, 38%, 39%, or 40%. Optionally, the porosity of the polyolefin-based film may be 29%-35%.

In some specific embodiments, the air permeability of the polyolefin-based film may be, for example, 100s/100cc, 110s/100cc, 120s/100cc, 130s/100cc, 140s/100cc, 150s/100cc, or 160s/100cc. Optionally, the air permeability of the polyolefin-based film may be 140-160s/100cc.

In some specific embodiments, the surface density of the polyolefin-based film may be, for example, 2.8 g/m², 2.9 g/m², 3.0 g/m², 3.1 g/m², 3.2 g/m², 3.3 g/m², 3.4 g/m², 3.5 g/m², or 3.6 g/m². Optionally, the surface density of the polyolefin-based film may be 3.3-3.6 g/m².

In some specific embodiments, crystallinity of the polyolefin-based film is ≥ 75%, for example, 75%, 77%, 78%, 79%, 80%, 82%, 85%, 90%, or 95%. Optionally, the crystallinity of the polyolefin-based film is 75%-85%.

In some specific embodiments, conductivity of the polyethylene-based film of this application may be above 0.6 ms/cm.

In some embodiments, according to the first aspect, a ninth example of the first aspect is proposed, where a machine-direction elongation rate of the polyolefin-based film may be 40%-120%, and a transverse-direction elongation rate may be 80%-120%.

In some specific embodiments, the machine-direction elongation rate of the polyolefin-based film may be, for example, 40%, 50%, 60%, 70%, 80%, 90%, 100%, 110%, or 120%. Optionally, the machine-direction elongation rate of the polyolefin-based film is 50%-110% or 55%-105%.

In some specific embodiments, the transverse-direction elongation rate of the polyolefin-based film may be, for example, 80%, 90%, 100%, 110%, or 120%. Optionally, the transverse-direction elongation rate of the polyolefin-based film is 90%-110%.

Without limitation, the polyolefin includes one or both of polypropylene and polyethylene.

A second aspect of this application provides a preparation method of polyolefin-based film, including:
mixing polyolefins with different weight-average molecular weights and a pore-forming agent, and making a resulting mixture into a film, where a total weight of the polyolefins accounts for 15wt%-35wt% of the mixture;
subjecting the film to biaxial drawing, where the machine-direction drawing ratio is 5-50 times, and the transverse-direction drawing ratio is 5-50 times;
removing the pore-forming agent to form pores; and
subjecting the film to draw-setting and heat-setting to obtain the polyolefin-based film.

In the technical solution of the embodiments of this application, the use of polyolefins with different weight-average molecular weights, coupled with an appropriate transverse-direction/machine-direction drawing ratio can produce an ultra-thin polyolefin-based film with high puncture strength and low thermal shrinkage. A higher puncture strength of the polyolefin-based film means better resistance to metal particle puncture, effectively preventing cathode particles, anode particles, and metal foreign objects from puncturing the separator under a specific pressure and causing a short circuit inside the bare cell. Therefore, the improvement in puncture strength of the polyolefin-based film can increase the short-circuit test pass rate of the bare cell. In addition, the increased drawing ratio can increase the orientations between polyolefin molecules, and improve the crystallinity of the ultra-thin polyethylene-based film, thereby enhancing the thermal stability of the ultra-thin polyethylene-based film. The thermal shrinkage performance of the ultra-thin polyethylene-based film of this application is better than that of a common polyethylene-based film with a thickness of 7 µm or 9 µm. The ultra-thin polyolefin-based film used as a separator of a battery can not only improve the portability of the battery, but also enhance the safety performance of the battery.

Further, in the technical solution of this embodiment, the prepared polyolefin-based film has the same features and advantages as the polyolefin-based film mentioned above, and details are not repeated herein.

In some embodiments, according to the second aspect, a first example of the second aspect is proposed, where the total weight of the polyolefins accounts for 20wt%-30wt% of the mixture. The machine-direction drawing ratio may be 10-20 times, and the transverse-direction drawing ratio can be 10-20 times. Further, a machine-direction drawing temperature may be 108°C-114°C, and a transverse-direction drawing temperature may be 113°C-118°C.

In this design, through optimization of the proportion of polyolefins, the machine-direction drawing ratio, and the transverse-direction drawing ratio, the thickness of the polyolefin-based film can be further reduced, the puncture strength can be improved, and the thermal shrinkage can be lowered.

In some specific embodiments, the proportion of multiple polyolefins in the mixture may be, for example, 20wt%, 21wt%, 22wt%, 23wt%, 24wt%, 25wt%, 26wt%, 27wt%, 28wt%, 29wt%, or 30wt%. Optionally, the proportion of polyolefins in the mixture may be 20wt%-25wt%, 23wt%-27wt%, or 25wt%-30wt%.

In some specific embodiments, the machine-direction drawing ratio may be, for example, 5 times, 6 times, 7 times, 8 times, 9 times, 10 times, 11 times, 12 times, 13 times, 14 times, 15 times, 16 times, 17 times, 18 times, 19 times, 20 times, 25 times, 30 times, 35 times, 40 times, 45 times, or 50 times. Optionally, the machine-direction drawing ratio is 5-20 times, 10-15 times, 15-20 times, or the like.

In some specific embodiments, the transverse-direction drawing ratio may be, for example, 5 times, 6 times, 7 times, 8 times, 9 times, 10 times, 11 times, 12 times, 13 times, 14 times, 15 times, 16 times, 17 times, 18 times, 19 times, 20 times, 25 times, 30 times, 35 times, 40 times, 45 times, or 50 times. Optionally, the transverse-direction drawing ratio is 5-20 times, 10-15 times, or 15-20 times, or the like.

In some embodiments, according to the second aspect, a second example of the second aspect is proposed, where the biaxial drawing causes crystallinity of the polyolefin-based film to be ≥ 75%; and optionally, the biaxial drawing causes the crystallinity of the polyolefin-based film to be 75%-85%.

It can be understood that the solutions and advantages of the polyolefin are the same as those in the first aspect, which are not repeated herein.

The pore-forming agent used is not particularly limited in this application, as long as it can fully dissolve the polyolefin. For example, the pore-forming agent may be but is not limited to one or more of white oil, liquid paraffin, mineral oil, soybean oil, phthalate ester, and aromatic ether. Optionally, the pore-forming agent is white oil. In some specific embodiments, the pore-forming agent is white oil, and various polyolefins with different weight-average molecular weights are mixed with white oil to obtain a liquid mixture. In the liquid mixture, the proportion of polyolefins in the liquid mixture is the solid content of the polyolefins.

In some embodiments, according to the second aspect, a fifth example of the second aspect is proposed, where the thickness of the film may be more than 1 mm, optionally 1-5 mm, for example, 1 mm, 2 mm, 3 mm, 4 mm, or 5 mm.

In some embodiments, according to the second aspect, a sixth example of the second aspect is proposed, where the biaxial drawing includes: first performing machine-direction drawing, and then performing transverse-direction drawing; or first performing transverse-direction drawing, and then performing machine-direction drawing; or performing machine-direction drawing and transverse-direction drawing simultaneously.

In some embodiments, according to the second aspect, a seventh example of the second aspect is proposed, where the removing the pore-forming agent includes: extracting the pore-forming agent from the film using an extractant. The type of the extractant can be selected according to the type of pore-forming agent. The extractant is mainly used to dissolve the pore-forming agent to form pores in the material. Optionally, the extractant is dichloromethane.

In some embodiments, according to the second aspect, an eighth example of the second aspect is proposed, where the draw-setting includes: performing small-ratio transverse-direction drawing on the film. The drawing ratio may be 1-3 times. A drawing temperature may be 125°C-140°C.

In some embodiments, according to the second aspect, a ninth example of the second aspect is proposed, where the heat-setting includes: performing heat-setting on the film. A heating temperature is ≥ 130°C, optionally 130°C-140°C, for example, 132°C-136°C. A heating time is ≥ 20s, optionally 20-60s, for example, 20-30s.

A third aspect of this application provides a separator including the polyolefin-based film according to the first aspect of this application or a polyolefin-based film obtained using the preparation method according to the second aspect of this application.

In the technical solution of the embodiments of this application, since the polyolefin-based film according to the first aspect of this application or the polyolefin-based film obtained using the preparation method according to the second aspect of this application is used, the separator of this application has the advantages of being ultra-thin, having high puncture strength, having low thermal shrinkage, and the like.

In some embodiments, according to the third aspect, an example of the third aspect is proposed, where the separator further includes a coating. The coating is provided on at least one surface of the polyolefin-based film.

In some specific embodiments, the coating may include an organic coating, an inorganic coating, or a combination thereof.

Optionally, the organic coating includes at least one of the following: a polyvinylidene fluoride coating, a polystyrene coating, an aramid coating, a polyester coating, a polyarylate coating, a polyacrylonitrile coating, an aromatic polyamide coating, a polyimide coating, a polysulfone coating, a polyether ketone coating, and a polyetherimide coating.

Optionally, the inorganic coating can include a ceramic coating.

A fourth aspect of this application provides a secondary battery including the separator according to the third aspect of this application.

In the technical solution of the embodiments of this application, since the polyolefin-based film according to the first aspect of this application or the polyolefin-based film obtained using the preparation method according to the second aspect of this application is used, the secondary battery of this application has the advantages of being ultra-thin, having high puncture strength, having low thermal shrinkage, and the like.

A fifth aspect of this application provides an electric apparatus including the secondary battery according to the fourth aspect of this application.

This application is further described with reference to examples. It should be understood that these examples are only for illustrating this invention and are not intended to limit the scope of this invention.

### Preparation of polyethylene-based film

### Example 1

First, the first polyethylene with a weight-average (Mw) molecular weight of 8.0× 10⁵ and the second polyethylene with an Mw molecular weight of 10⁵ were mixed at a mass ratio of 5:5, and then blended with white oil, where the solid content of polyethylene was 25%. Then, the mixture was heated and melted in an extruder, followed by cooling and casting to form a 2 mm cast film. The cast film was subjected to machine-direction and transverse-direction drawing, where the machine-direction drawing ratio was 11.2 times, the machine-direction drawing temperature was 110°C, the transverse-direction drawing ratio was 10.7 times, and the transverse-direction drawing temperature was 115°C. After heat preservation, a film with an area increased by 120 times was obtained. Dichloromethane was used to extract the white oil from the film to form pores. The dried microporous film was subjected to transverse-direction drawing at a small ratio of 2 times and a small-ratio transverse-direction drawing temperature of 133°C, followed by heat-setting at 133°C to obtain a polyethylene-based porous film with a thickness of 5.2 µm and a crystallinity of 79.1 %.

### Example 2

First, the first polyethylene with an Mw molecular weight of 8.0×10⁵ and the second polyethylene with an Mw molecular weight of 3.0 × 10⁵ were mixed at a mass ratio of 4:6, and then blended with white oil, where the solid content of polyethylene was 25%. Then, the mixture was heated and melted in an extruder, followed by cooling and casting to form a 2.1 mm cast film. The cast film was subjected to machine-direction and transverse-direction drawing, where the machine-direction drawing ratio was 10.3 times, the machine-direction drawing temperature was 110°C, the transverse-direction drawing ratio was 10.7 times, and the transverse-direction drawing temperature was 115°C. After heat preservation, a film with an area increased by about 110 times was obtained. Dichloromethane was used to extract the white oil from the film to form pores. The dried microporous film was subjected to transverse-direction drawing at a small ratio of 1.8 times and a small-ratio transverse-direction drawing temperature of 133°C, followed by heat-setting at 133°C to obtain a polyethylene-based porous film with a thickness of 5.2 µm and a crystallinity of 79.1 %.

### Examples 3 to 11

The films were prepared according to the method described in Example 1, except that the parameters listed in Table 1 were different from those in Example 1.

### Comparative Example 1

First, the second polyethylene with an Mw molecular weight of 3.0×10⁵ was selected and blended with white oil, where the solid content of polyethylene was 25%. Then, the mixture was heated and melted in an extruder, followed by cooling and casting to form a 2 mm cast film. The cast film was subjected to machine-direction and transverse-direction drawing, where the machine-direction drawing ratio was 11.2 times, the machine-direction drawing temperature was 110°C, the transverse-direction drawing ratio was 10.7 times, and the transverse-direction drawing temperature was 115°C. After heat preservation, a film with an area increased by 120 times was obtained. Dichloromethane was used to extract the white oil from the film to form pores. The dried microporous film was subjected to transverse-direction drawing at a small ratio of 2 times and a small-ratio transverse-direction drawing temperature of 133°C, followed by heat-setting at 133°C to obtain a polyethylene-based porous film with a thickness of 5.2 µm.

### Comparative Example 2

First, the second polyethylene with an Mw molecular weight of 1.0×10⁵ was selected and blended with white oil, where the solid content of polyethylene was 25%. Then, the mixture was heated and melted in an extruder, followed by cooling and casting to form a 2 mm cast film. The cast film was subjected to machine-direction and transverse-direction drawing, where the machine-direction drawing ratio was 11.2 times, the machine-direction drawing temperature was 110°C, the transverse-direction drawing ratio was 10.7 times, and the transverse-direction drawing temperature was 115°C. After heat preservation, a film with an area increased by 120 times was obtained. Dichloromethane was used to extract the white oil from the film to form pores. The dried microporous film was subjected to transverse-direction drawing at a small ratio of 2 times and a small-ratio transverse-direction drawing temperature of 133°C, followed by heat-setting at 133°C to obtain a polyethylene-based porous film with a thickness of 5.2 µm.

### Comparative Examples 3 to 7

The films were prepared according to the method described in Example 1, except that the parameters listed in Table 1 were different from those in Example 1.

**Table 1**

| No. | First polyethylene | Second polyethylene | Mass ratio of first polyethylene to second polyethylene | Solid content of polyethylene | Drawing | | Setting | |
|---|---|---|---|---|---|---|---|---|
| | Mw molecular weight | Mw molecular weight | | | Machine-direction drawing ratio (times) | Transverse-direction drawing ratio (times) | Draw-setting ratio (times) | Heat-setting temperature (°C) |
| Example 1 | 8.0×10⁵ | 3.0×10⁵ | 5:5 | 25% | 11.2 | 10.7 | 2 | 133 |
| Example 2 | 8.0×10⁵ | 3.0×10⁵ | 4:6 | 25% | 10.3 | 10.7 | 1.8 | 133 |
| Example 3 | 9.0×10⁵ | 3.0×10⁵ | 5:5 | 25% | 11.2 | 10.7 | 2 | 133 |
| Example 4 | 8.0×10⁵ | 4.0×10⁵ | 5:5 | 25% | 11.2 | 10.7 | 2 | 133 |
| Example 5 | 8.0×10⁵ | 4.0×10⁵ | 5:5 | 27% | 11.2 | 10.7 | 2 | 133 |
| Example 6 | 8.0×10⁵ | 4.0×10⁵ | 3:7 | 25% | 11.2 | 10.7 | 2 | 133 |
| Example 7 | 8.0×10⁵ | 4.0×10⁵ | 8:2 | 25% | 11.2 | 10.7 | 2 | 133 |
| Example 8 | 8.0×10⁵ | 4.0×10⁵ | 9.5:0.5 | 25% | 11.2 | 10.7 | 2 | 133 |
| Example 9 | 8.0×10⁵ | 4.0×10⁵ | 5:5 | 25% | 5 | 5 | 2 | 133 |
| Example 10 | 8.0×10⁵ | 4.0×10⁵ | 5:5 | 25% | 20 | 20 | 2 | 133 |
| Example 11 | 8.0×10⁵ | 4.0×10⁵ | 5:5 | 25% | 50 | 50 | 2 | 133 |
| Example 12 | 8.0×10⁵ | 3.0×10⁵ | 5:5 | 23% | 9 | 9 | 1.5 | 130 |
| Example 13 | 9.0×10⁵ | 3.0×10⁵ | 4:6 | 25% | 13 | 13 | 2 | 135 |
| Example 14 | 9.0×10⁵ | 4.0×10⁵ | 3:7 | 27% | 15 | 15 | 2 | 138 |
| Example 15 | 3.0×10⁶ | 6.0×10⁵ | 9:1 | 30% | 18 | 18 | 3 | 140 |
| Example 16 | 1.5×10⁶ | 3.0×10⁵ | 5:5 | 25% | 12 | 11 | 2 | 133 |
| Example 17 | 3.0×10⁶ | 4.0×10⁵ | 5:5 | 25% | 12 | 11 | 2 | 133 |
| Example 18 | 8.0×10⁵ | 6.0×10⁵ | 5:5 | 25% | 12 | 11 | 2 | 133 |
| Comparative Example 1 | - | 3.0×10⁵ | - | 25% | 11.2 | 10.7 | 2 | 133 |
| Comparative Example 2 | - | 1.0×10⁵ | - | 25% | 11.2 | 10.7 | 2 | 133 |
| Comparative Example 3 | **5.0×10⁵** | 3.0×10⁵ | 5:5 | 25% | 11.2 | 10.7 | 2 | 133 |
| Comparative Example 4 | 8.0×10⁵ | 3.0×10⁵ | **1:9** | 25% | 11.2 | 10.7 | 2 | 133 |
| Comparative Example 5 | 8.0×10⁵ | 3.0×10⁵ | 5:5 | **10%** | 11.2 | 10.7 | 2 | 133 |
| Comparative Example 6 | 8.0×10⁵ | 3.0×10⁵ | 5:5 | **40%** | 11.2 | 10.7 | 2 | 133 |
| Comparative Example 7 | 8.0×10⁵ | 3.0×10⁵ | 5:5 | 25% | 5 | 3 | 2 | 133 |

### Parameter tests of polyethylene-based film

1. Puncture strength test: The separator sample was cut with a blade, with the length and width of the sample each greater than 64 mm. After the cleanliness of the Gotech tensile tester was checked, the puncture fixture was installed, and the separator was placed in the center of the fixture and covered with the upper cover. On the computer operation panel of the Gotech tensile tester, the test was set to "separator compression", the speed was set to 50 mm/min, and then "start" was tapped. The puncture tests were performed in sequence, and the force-displacement curves were stored. At least three parallel tests were performed for each group. If there were three force-displacement curves with good repeatability, the next group of tests could be started. The test results are shown in Table 2 below.
2. Tensile strength/elongation rate test: Sample punching: (1) A 20 mm * 100 mm die cutter and crepe tape were prepared; and (2) samples were punched along the machine direction or transverse direction according to the test requirements, with 10 samples punched in each group, and then the samples were placed into clean sample bags by group, and the bags were labeled by group. The Gotech tensile tester was started, and the separator tensile test, a speed of 50 mm/min, and an initial clamp distance of 40 mm were set in sequence; and the sample under test was placed in the middle of the clamps, with the upper and lower ends clamped by the clamps. On the computer desktop, the tensile operation interface was clicked, the force, displacement, and the like were reset to zero, and then "start" was clicked to perform the test. After the test, the tensile curve was recorded. At least three samples were tested for each group. If there were three force-displacement curves with good repeatability, the next group of tests could be started. The test results are shown in Table 2 below.
3. Thermal shrinkage test: A 100 mm * 50 mm die cutter was selected, and the separator was punched into 100 mm * 50 mm samples through a punching machine. The obtained 100 mm * 50 mm separators each were marked with a number at the lower right corner with a marker, and measured before baking. The baking temperature and time were set. After the oven reached the specified temperature, the separators were put into the oven along with the steel plate for baking. After the specified baking time was reached, the separators were taken out and left standing at room temperature for 10 minutes. The transverse- and machine-direction dimensions of the separators with the same number were measured after baking, the transverse-direction dimension was recorded as X2, and the machine-direction dimension was recorded as Y2. Machine-direction thermal shrinkage = (100 - Y2)/100 * 100%, and transverse-direction thermal shrinkage = (50 - X2)/50 * 100%. In the case of unevenly shrunk sample edges, the position with the maximum shrinkage was measured. The test results are shown in Table 2 below.
4. Air permeability test: The separator was cut into samples with a size of greater than 40 mm * 40 mm. The power switch of the digital timer was turned on, and the "ENTER" button on the dashboard was pressed to enter the selection interface. The plugcock at the bottom was loosened first, and then the plunger of the air permeability tester was lifted and hung on the top pin. Note: The lifting process should be slow to prevent oil spillage. The sample was placed on the sample testing platform, with the sample covering the entire sample region. The knob was tightened, and the measurement region (generally 100cc, subject to change in special cases) was selected. The obtained small film was placed on the sample testing platform, with the film covering the testing platform. First, the Reset button was pressed, and then the plunger was released to start the test. After the measurement was completed, the plugcock was slowly unscrewed until the plunger dropped to the lowest position. The sample was taken out, and the plunger was slowly lifted for the next measurement. Note: The lifting process should be slow to prevent oil spillage. The data was recorded promptly after the measurement was completed. The test results are shown in Table 2 below.
5. Separator thickness test: The measurement platform and the measurement head were cleaned. Cleanness of the measurement platform and measurement head needed to be ensured. Note: When cleaning, use a dust-free cloth dipped with a small amount of alcohol, and gently wipe the bottom of the measurement head 5 times and wipe the measurement platform 3 times. The sample under test was checked for appearance defects such as damages, foreign objects, and coating defects (after coating). In the case of any appearance defect found, re-sampling was performed. The "▼" button was pressed to make the measurement head close to the testing platform, and the "zero" button was pressed to reset the thickness gauge. The "▲" button was pressed to raise the measurement head, and the sample was placed flat on the testing platform, ensuring that the separator at the measurement position was flat on the testing platform and the measurement position was aligned with the measurement head. The "▼" button was pressed and held until the measurement head stopped moving. When the data became stable, the data was recorded into the table. The test results are shown in Table 2 below.
6. Porosity test: The obtained separator sample was punched into rectangular samples with a 100 mm * 50 mm die cutter. The length L and width W of the rectangular sample were measured. Then, the thickness was measured with a 0.1 µm micrometer. Specifically, the thicknesses at a total of 5 points were measured, with 4 points on the edges and 1 point in the middle (as shown in the figure); and the average of the thicknesses of the 5 points was taken as the final thickness, which was recorded as T. The rectangular sample was weighed using an analytical balance with an accuracy of 0.0001 g, and the weight was recorded as M1. The measured length L, width W, and thickness T, and the material density ρ of the separator were used to calculate the theoretical weight of the separator, recorded as M2, where M2 = L * W * T * ρ. Porosity = (1 - M1/M2) * 100%.
7. Surface density test: The prepared separator sample was punched into rectangular samples with a 100 mm * 50 mm die cutter. The length L and width W of the rectangular sample were measured, the sheet-like separator was weighed, and the weight was recorded as M. Then, surface density = M/(L * W). The test results are shown in Tables 2 and 3 below.

**Table 2: Test results for related parameters of polyethylene-based film**

| No. | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Thickness (µm) | | 5.2 | 5.2 | 5.2 | 5.2 | 5.2 | 5.2 | 5.2 | 5.2 | 5.2 | 5.2 | 5.2 |
| Surface density (g/m²) | | 3.5 | 3.5 | 3.4 | 3.4 | 3.5 | 3.4 | 3.4 | 3.5 | 3.4 | 3.4 | 3.5 |
| Porosity (%) | | 29.1 | 29.3 | 31.2 | 31.6 | 29.4 | 31.8 | 31.9 | 30.8 | 31.8 | 31.9 | 31.7 |
| Air permeability (s/100cc) | | 140 | 156 | 146 | 143 | 151 | 150 | 143 | 148 | 150 | 143 | 148 |
| Puncture strength (gf) | | 423 | 405 | 421 | 417 | 432 | 418 | 413 | 405 | 403 | 423 | 402 |
| Tensile strength (kgf/cm²) | MD | 4741 | 4546 | 4462 | 4516 | 4465 | 4326 | 4216 | 4165 | 4026 | 4316 | 4165 |
| | TD | 3510 | 3677 | 3578 | 3635 | 3526 | 3278 | 3135 | 3026 | 3078 | 3635 | 31669 |
| Elongation rate (%) | MD | 102 | 57 | 65 | 68 | 74 | 75 | 77 | 78 | 80 | 77 | 65 |
| | TD | 91 | 110 | 117 | 119 | 123 | 125 | 127 | 129 | 130 | 127 | 107 |
| Thermal shrinkage (%) (115°C/1h) | MD | 1.8 | 1.3 | 1.4 | 1.1 | 1.1 | 1.5 | 1.4 | 1.5 | 1.5 | 1.4 | 1.5 |
| | TD | 0.5 | 0.5 | 0.6 | 0.4 | 0.6 | 0.5 | 0.4 | 0.6 | 0.5 | 0.4 | 0.6 |

**Table 3: Test results for related parameters of polyethylene-based film**

| No. | | Example 12 | Example 13 | Example 14 | Example 15 | Example 16 | Example 17 | Example 18 |
|---|---|---|---|---|---|---|---|---|
| Thickness (µm) | | 6 | 4 | 2 | 0.5 | 5 | 5 | 5 |
| Surface density (g/m²) | | 3.6 | 2.9 | 2.8 | 2.8 | 3.2 | 3.3 | 3.2 |
| Porosity (%) | | 34 | 27 | 25 | 25 | 34 | 33 | 35 |
| Air permeability (s/100cc) | | 150 | 110 | 100 | 100 | 130 | 135 | 134 |
| Puncture strength (gf) | | 500 | 450 | 500 | 450 | 423 | 450 | 410 |
| Tensile strength (kgf/cm²) | MD | 5100 | 4500 | 4000 | 4200 | 4500 | 5200 | 4300 |
| | TD | 3800 | 4000 | 3700 | 4300 | 4100 | 4000 | 3900 |
| Elongation rate (%) | MD | 80 | 90 | 120 | 70 | 95 | 75 | 130 |
| | TD | 120 | 110 | 108 | 90 | 95 | 80 | 110 |
| Thermal shrinkage (%) (115°C/1h) | MD | 1.7 | 1.6 | 1.4 | 1.3 | 1.8 | 1.4 | 1.9 |
| | TD | 0.9 | 0.8 | 0.8 | 0.6 | 1.0 | 0.9 | 1.0 |

**Table 4: Test results for related parameters of polyethylene-based film**

| No. | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Thickness (µm) | | 5.2 | 5.2 | 5.2 | 5.2 | 5.2 | 5.2 | 5.2 |
| Surface density (g/m²) | | 3.5 | 3.5 | 3.4 | 3.4 | 3.5 | 3.5 | 3.5 |
| Porosity (%) | | 29.3 | 29.5 | 31.2 | 31.0 | 31.2 | 31.3 | 31.4 |
| Air permeability (s/100cc) | | 136 | 168 | 152 | 154 | 158 | 178 | 138 |
| Puncture strength (gf) | | 237 | 248 | 318 | 288 | 321 | 348 | 248 |
| Tensile strength (kgf/cm²) | MD | 2145 | 2433 | 2753 | 2533 | 2133 | 2746 | 2013 |
| | TD | 1832 | 2587 | 2687 | 2387 | 2387 | 2867 | 1987 |
| Elongation rate (%) | MD | 69 | 89 | 76 | 95 | 87 | 81 | 45 |
| | TD | 101 | 121 | 118 | 113 | 111 | 112 | 63 |
| Thermal shrinkage (%) (115°C/1h) | MD | 2.3 | 3.1 | 2.1 | 2.4 | 2.1 | 2.1 | 3.4 |
| | TD | 1.5 | 1.9 | 1.6 | 1.8 | 1.3 | 1.9 | 2.6 |

The polyethylene-based porous films of Examples 1 to 18 and Comparative Examples 1 to 7 were used to prepare lithium-ion batteries according to the following general preparation method.

### Preparation of lithium-ion battery

(1) The prepared polyethylene-based porous film was slit, and ceramics were applied to surface of the polyethylene-based porous film, followed by spraying of polyvinylidene fluoride (PVDF) to obtain a separator.
(2) Preparation of positive electrode plate
   The positive electrode active material NCM811, conductive agent Super P, and binder polyvinylidene fluoride (PVDF) were mixed at a mass ratio of positive electrode active material: Super P:PVDF = 8:1:1. The mixture was added to the solvent N-methyl-2-pyrrolidone (NMP), and stirred well under the action of a vacuum mixer to obtain a positive electrode slurry, where the solid content of the positive electrode slurry was 50wt%. The positive electrode slurry was evenly applied onto the positive electrode current collector aluminum foil which was then dried at 85°C. Then, cold pressing, trimming, cutting, and slitting were performed, followed by drying under vacuum conditions at 85°C for 4 hours to obtain a positive electrode plate.
(3) Preparation of negative electrode plate
   The negative electrode active material graphite, conductive agent Super P, thickener sodium carboxymethyl cellulose (CMC), and binder styrene-butadiene rubber emulsion (SBR) were mixed at a mass ratio of graphite: Super P:CMC:SBR = 80:15:3:2. The mixture was added to the solvent deionized water, and stirred well under the action of a vacuum mixer to obtain a negative electrode slurry, where the solid content of the negative electrode slurry was 30wt%. The negative electrode slurry was evenly applied onto the negative electrode current collector copper foil which was then dried at 85°C. Then, cold pressing, trimming, cutting, and slitting were performed, followed by drying under vacuum conditions at 120°C for 12 hours to obtain a negative electrode plate.
(4) The positive electrode plate in step (2), the separator in step (1), and the negative electrode plate in step (3) were stacked in sequence, so that the separator was sandwiched between the positive and negative electrode plates to provide separation. Then, the resulting stack was wound into a square bare cell which was then welded with the tabs, placed into a packaging foil aluminum film, and baked at 80°C to remove moisture, followed by electrolyte injection and sealing. Then, processes such as standing, hot and cold pressing, formation (charged to 3.3 V at a constant current of 0.02C, and then charged to 3.6 V at a constant current of 0.1C), shaping, and capacity testing were performed to obtain a finished soft-pack lithium-ion battery, with a thickness of 4.0 mm, a width of 60 mm, and a length of 140 mm.

### Battery performance test

### 1. Direct current resistance test of battery

At a specified temperature, short-time (10s) high-current charge/discharge was performed on the lithium-ion battery. The DCR value was obtained by calculating ratio of the voltage difference before and after charging/discharging to the current. The test conditions and test results are shown in Table 3 below.

### 2. Short-circuit rate test

After winding, a shaping hot press was performed on the bare cell. During the press process on the bare cell, a HIOKI INSULATION TESTER insulation tester was used to test the short-circuit rate of the bare cell. The cell with a resistance less than 2 MΩ was determined as a defective product. The test sample size was 100 ea cells, and the failure rate = number of failures/100 * 100%. The test results are shown in Table 3 below.

### 3. Hot-box test of cell

A single cell was placed in a temperature box and clamped with a large-sized aluminum fixture. The temperature box heated up at 1°C/min until the cell failed, and the cell failure temperature was recorded. During the test, the cell voltage, the voltage from the positive electrode to the top cover, the voltage from the negative electrode to the top cover, and the temperatures of the positive electrode, negative electrode, center of the large surface, explosion-proof vent, bottom, outlet position, front side of the sample stand, and rear side of the sample stand were monitored. The oven temperature at the time of cell failure after testing was recorded. The test results are shown in Table 4 below.

### 4. Cell thermal diffusion test

Three cells were assembled into a module, and the cell voltage, the voltage from the positive electrode to the top cover, the voltage from the negative electrode to the top cover, and the temperatures of the positive electrode, negative electrode, center of the large surface, explosion-proof vent, bottom, outlet position, front side of the sample stand, and rear side of the sample stand were monitored. The first cell was heated through a heating plate until it failed, and the failure time T1 of the first cell was recorded. The thermal runaway of the first cell triggered the failure of the second cell, and the failure time T2 of the second cell was recorded. Likewise, the failure time T3 of the third cell was recorded. The test results are shown in Table 4 below.

**Table 4: Battery performance test results**

| | DCR (25°C, 10s, 50%SOC) | Short-circuit rate of bare cell | Cell failure temperature in hot-box test | Cell failure time T2 of the second cell in thermal diffusion test |
|---|---|---|---|---|
| Example 1 | 1.36 mohm | 0% | 260°C | 24.7 min |
| Example 2 | 1.34 mohm | 0% | 261°C | 25.7 min |
| Example 3 | 1.35 mohm | 0% | 264°C | 25.9 min |
| Example 4 | 1.34 mohm | 0% | 262°C | 25.1 min |
| Example 5 | 1.35 mohm | 0% | 263°C | 24.5 min |
| Example 6 | 1.35 mohm | 0% | 262°C | 24.9 min |
| Example 7 | 1.34 mohm | 0% | 261°C | 24.3 min |
| Example 8 | 1.35 mohm | 0% | 260°C | 24.1 min |
| Example 9 | 1.35 mohm | 0% | 255°C | 23.5 min |
| Example 10 | 1.34 mohm | 0% | 261°C | 24.3 min |
| Example 11 | 1.35 mohm | 0% | 250°C | 23.1 min |
| Example 12 | 1.34 mohm | 0% | 270°C | 26.5 min |
| Example 13 | 1.35 mohm | 0% | 255°C | 25.7 min |
| Example 14 | 1.34 mohm | 0% | 253°C | 24.7 min |
| Example 15 | 1.34 mohm | 0% | 251°C | 24.5 min |
| Example 16 | 1.35 mohm | 0% | 250°C | 26.7 min |
| Example 17 | 1.34 mohm | 0% | 260°C | 28.2 min |
| Example 18 | 1.34 mohm | 0% | 255°C | 25.8 min |
| Comparative Example 1 | 1.63 mohm | 2% | 221°C | 15.6 min |
| Comparative Example 2 | 1.61 mohm | 4% | 226°C | 14.9 min |
| Comparative Example 3 | 1.66 mohm | 3% | 215°C | 15.3 min |
| Comparative Example 4 | 1.46 mohm | 4% | 228°C | 15.7 min |
| Comparative Example 5 | 1.76 mohm | 3% | 221°C | 15.4 min |
| Comparative Example 6 | 1.56 mohm | 3% | 220°C | 15.8 min |
| Comparative Example 7 | 1.61 mohm | 4% | 211°C | 13.8 min |

| | | | | |
|---|---|---|---|---|
| Note: 50%SOC means 50% state of charge. | | | | |

Comparison of Example 1 with Comparative Examples 1 and 2 shows that in Comparative Examples 1 and 2, polyethylene with only one kind of molecular weight was used, and the polyethylene-based films prepared in Comparative Examples 1 and 2 have low puncture strength and high thermal shrinkage. The lithium-ion batteries prepared from the polyethylene-based films of Comparative Examples 1 and 2 have high DCR values and short-circuit rates, low hot-box test temperatures, and short time required for thermal failure of the adjacent second cell. The polyethylene-based film prepared in Example 1 has high puncture strength and low thermal shrinkage. The lithium-ion battery prepared from the polyethylene-based film of Example 1 has low DCR value and short-circuit rate, high hot-box test temperature, and long time required for thermal failure of the adjacent second cell. Therefore, the polyethylene-based film of this application used as a separator for secondary batteries can improve safety performance.

Comparison of Example 1 with Comparative Example 3 shows that the polyethylene-based film prepared in Comparative Example 3 has a puncture strength of only 318 gf. The lithium-ion battery prepared from the polyethylene-based film of Comparative Example 3 has high DCR value and short-circuit rate, low hot-box test temperature, and short time required for thermal failure of the adjacent second cell, resulting in low safety performance, which is not conducive to large-scale production.

Comparison of Example 1 with Comparative Example 4 shows that the polyethylene-based film prepared in Comparative Example 4 has a puncture strength of only 288 gf. The lithium-ion battery prepared from the polyethylene-based film of Comparative Example 4 has high DCR value and short-circuit rate, low hot-box test temperature, and short time required for thermal failure of the adjacent second cell, resulting in low safety performance, which is not conducive to large-scale production.

Comparison of Example 1 with Comparative Examples 5 and 6 shows that if the proportion of polyethylene to white oil is excessively low, the amount of dichloromethane consumed in the extraction stage increases, which is not conducive to cost control. If the proportion of polyethylene to white oil is excessively high, extrusion pressures are inconsistent, and the film surface is prone to uneven thickness, which is not conducive to quality control of the separator. The lithium-ion batteries prepared from such separators have high short-circuit rates, which is not conducive to large-scale production.

Comparison of Example 1 with Comparative Example 7 shows that both the puncture strength and elongation rate in Comparative Example 7 are significantly reduced. The lithium-ion battery prepared from such separator has high short-circuit rate, which is not conducive to large-scale production.

The above descriptions are merely the preferred specific embodiments of this invention, but the protection scope of this invention is not limited thereto. Any changes or substitutions that can be easily conceived by those skilled in the art within the technical scope disclosed by this invention should fall within the protection scope of this invention. Therefore, the protection scope of this invention shall be subject to the protection scope of the claims.

## Claims

1. A polyolefin-based film, **characterized in that** the polyolefin-based film comprises polyolefins with different weight-average molecular weights; wherein thickness of the polyolefin-based film is ≤ 6 µm, and the polyolefin-based film has a machine-direction shrinkage of ≤ 2% and a transverse-direction shrinkage of ≤ 1% at 115°C/1h.

2. The polyolefin-based film according to claim 1, **characterized in that** the thickness of the polyolefin-based film is 0.5-6 µm;
optionally, a puncture strength of the polyolefin-based film is ≥ 380 gf; further optionally, the puncture strength of the polyolefin-based film is 380-1000 gf; and still further optionally, the puncture strength of the polyolefin-based film is 400-600 gf; and
optionally, the polyolefin-based film has a machine-direction shrinkage of 0%-1.8% and a transverse-direction shrinkage of 0%-0.8% at 115°C/1h.

3. The polyolefin-based film according to claim 1 or 2, **characterized in that** the polyolefin comprises a first polyethylene and a second polyethylene, wherein
a weight-average molecular weight of the first polyethylene is ≥ 800,000; and optionally, the weight-average molecular weight of the first polyethylene is 800,000-3,000,000; and
a weight-average molecular weight of the second polyethylene is ≤ 600,000; and optionally, the weight-average molecular weight of the second polyethylene is 300,000-600,000.

4. The polyolefin-based film according to claim 3, **characterized in that** a mass ratio of the first polyethylene to the second polyethylene is 3:7-9.9:0.1.

5. The polyolefin-based film according to any one of claims 1 to 4, **characterized in that** the polyolefin comprises one or both of polypropylene and polyethylene.

6. The polyolefin-based film according to any one of claims 1 to 5, **characterized in that** a machine-direction tensile strength of the polyolefin-based film is ≥ 3800 kgf/cm², and a transverse-direction tensile strength of the polyolefin-based film is ≥ 3000 kgf/cm².

7. The polyolefin-based film according to any one of claims 1 to 6, **characterized in that** the polyolefin-based film has one or more of the following characteristics:
(1) porosity of the polyolefin-based film is 25%-40%;
(2) air permeability of the polyolefin-based film is 100-160s/100cc; and
(3) surface density of the polyolefin-based film is 2.8-3.6 g/m².

8. The polyolefin-based film according to any one of claims 1 to 7, **characterized in that** crystallinity of the polyolefin-based film is ≥ 75%; and optionally, the crystallinity of the polyolefin-based film is 75%-85%.

9. A preparation method of polyolefin-based film, **characterized by** comprising:
mixing polyolefins with different weight-average molecular weights and a pore-forming agent, and making a resulting mixture into a film, wherein a total weight of the polyolefins accounts for 15wt%-35wt% of the mixture;
subjecting the film to biaxial drawing, wherein a machine-direction drawing ratio is 5-50 times, and a transverse-direction drawing ratio is 5-50 times; and optionally, the machine-direction drawing ratio is 5-20 times, and the transverse-direction drawing ratio is 5-20 times;
removing the pore-forming agent to form pores; and
subjecting the film to draw-setting and heat-setting to obtain the polyolefin-based film.

10. The preparation method according to claim 9, **characterized in that** the total weight of the polyolefins accounts for 20wt%-30wt% of the mixture; and the machine-direction drawing ratio is 10-20 times, and the transverse-direction drawing ratio is 10-20 times.

11. The preparation method according to claim 9 or 10, **characterized in that** the biaxial drawing causes crystallinity of the polyolefin-based film to be ≥ 75%; and optionally, the biaxial drawing causes the crystallinity of the polyolefin-based film to be 75%-85%.

12. The preparation method according to any one of claims 9 to 11, **characterized in that** the polyolefin comprises a first polyethylene and a second polyethylene, wherein
a weight-average molecular weight of the first polyethylene is ≥ 800,000; and optionally, the weight-average molecular weight of the first polyethylene is 800,000-3,000,000; and
a weight-average molecular weight of the second polyethylene is ≤ 600,000; and optionally, the weight-average molecular weight of the second polyethylene is 300,000-600,000.

13. The preparation method according to claim 12, **characterized in that** a mass ratio of the first polyethylene to the second polyethylene is 3:7-9.9:0.1.

14. The preparation method according to any one of claims 9 to 13, **characterized in that** the pore-forming agent comprises one or more of white oil, liquid paraffin, mineral oil, soybean oil, phthalate, and aromatic ether.

15. A separator, **characterized by** comprising the polyolefin-based film according to any one of claims 1 to 8 or a polyolefin-based film obtained using the preparation method according to any one of claims 9 to 14.

16. A secondary battery, **characterized by** comprising the separator according to claim 15.

17. An electric apparatus, **characterized by** comprising the secondary battery according to claim 16.
